# EUROPEAN PATENT SPECIFICATION

(11) **EP 3 902 738 B1**
(45) Date of publication and mention of the grant of the patent: **04.09.2024**
(21) Application number: 19835507.5
(22) Date of filing: 16.12.2019
(51) Int. Cl.: B62K 25/00, B62K 25/08, B62K 25/16

(54) **MOTORCYCLE FRONT SUSPENSION**
MOTORRADVORDERRADAUFHÄNGUNG
SUSPENSION AVANT DE MOTOCYCLETTE

(30) Priority: 24.12.2018 IT 201800021010
(43) Date of publication of application: 03.11.2021
(73) Proprietor: Piaggio & C. S.P.A., 56025 Pontedera Pisa (IT)
(72) Inventor: RAFFAELLI, Andrea, 56025 Pontedera (Pisa) (IT); SANTUCCI, Mario Donato, 56025 Pontedera (Pisa) (IT)
(74) Representative: Carangelo, Pierluigi
(86) International application number: PCT/IB2019/060841
(87) International publication number: WO 2020/136498

(56) References cited:
- EP-A1- 2 996 929
- EP-A1- 2 996 929
- EP-B1- 2 996 929
- WO-A1-00/13961
- WO-A1-87/01670
- WO-A1-87/01670
- DE-A1- 10 120 479
- DE-A1- 10 120 479
- US-A- 4 180 280
- US-A- 6 152 472

## Description

### TECHNICAL FIELD OF THE INVENTION

The present invention refers to the technical field of suspensions for transport vehicles and concerns in particular a motorcycle front suspension.

### BACKGROUND OF THE INVENTION

In the motorcycle field, it is known that a swing arm suspension is used in the forecarriage of the motorcycle. A swing arm suspension, which may be either a single-sided fork or a double-sided fork, generally comprises a rigid arm, also called a steering arm, on which a swing arm is articulated and ends on the front-wheel axle. A single-sided swing arm suspension is described for example in European Patent EP2996929B1. Another prior art front suspension is disclosed in WO87/01670A, which discloses all the features of the preamble of independent claim 1

In known swing arm suspensions, the steering arm is mechanically connected to the motorcycle's steering handlebar. Moreover, the shock absorber group, typically comprising a spring and a damper, is attached to the swing arm. The shock absorber group mechanically connects the steering arm to the front wheel axle.

Usually, the shock absorber group is rigidly joined to the front wheel axle: typically, the attachment foot, or lower end of the shock absorber group, is connected to the wheel axle by means of a rigid bracket. However, solutions are known, such as the one described in European patent EP2996929B1, wherein the attachment foot is joined to the front wheel axle in a non-rigid manner.

In the swing arm front suspensions of the prior art, it is known to fix a disc brake caliper to the attachment foot of the shock absorber group so that the disc brake caliper is fixed with respect to the attachment foot. To avoid interference with the swing arm, the swing arm and disc brake caliper are normally arranged on opposite sides of the attachment foot of the shock absorber group.

The front swing arm suspensions of the prior art described above have several drawbacks.

A first drawback is a possible excessive sinking during braking. In effect, during braking, as an effect of the load transfer on the front of the vehicle due to deceleration, the shock absorber group tends to compress and therefore to 'sink' more than would be the case from the static weight of the vehicle with the driver and any other suspended masses (such as the passenger, baggage and the like).

The sinking of the front axle, possibly linked to reaching the limit stop in compression, has as a direct result the significant modification of the attitude of the vehicle.

In effect, if one thinks, for example, of a two-wheeled motorcycle, however the same phenomenon also applies to different types of vehicles with more wheels, in the compression phase of the shock absorber group the trail of the vehicle is in particular reduced. Modifying the trail changes the sensitivity and responsiveness of the handlebar perceived by the driver. Moreover, following a poorly controlled and/or excessive sinking, an extension of the rear suspension is generally obtained, which is in turn poorly controlled with consequent lightening of the rear axle until reaching at the limit the condition of detachment of the rear wheel from the ground which may cause the loss of control of the trajectory taken by the driver.

It should be noted that the change of attitude during the sinking phase does not necessarily have negative effects a priori. In other words, on the one hand, an excessive sinking is certainly negative, since it involves a change in dynamic attitude that may put the vehicle and the driver in crisis; on the other hand, a controlled sinking of the front suspension may even facilitate and improve the drivability and driving feeling.

In effect, the driver, due also to the extent of the sinking of the front suspension, is able to perceive the dynamic behavior of the vehicle as well as notice, in advance, that the tire's grip limit has been reached. In addition, a controlled sinking of the front axle allows a better descent into a bend to take a curve both because it facilitates the lowering of the front axle and because reducing the trail increases the responsiveness and therefore the sensitivity of the driver.

As one may deduce from the above, the sinking of the front suspension, called 'dive', determines, depending on its magnitude, a substantial modification of the dynamic trim of the vehicle. A controlled type of sinking is not only not harmful but improves the drivability and maneuverability of the vehicle.

A second drawback of the front swing arm motorcycle suspensions of the prior art is that the arrangement of the parts close to the front wheel hub and brake disc is not very compact. In effect, in such known suspensions, on one side there is the swing arm, in a substantially central position there is the attachment foot of the shock absorber group, and on the other side there is the brake caliper. This lack of compactness leads to both lower cooling efficiency of the brake disc and a lack of aesthetic cleanliness.

The general object of the present description is to provide a front swing arm motorcycle suspension that is capable of resolving, in full or in part, the aforesaid drawbacks.

This object is achieved by a motorcycle front suspension as generally defined in claim 1. Preferred and advantageous embodiments of the aforesaid motorcycle suspension are defined in the accompanying dependent claims.

The invention will be better understood from the following detailed description of the particular embodiments thereof made by way of example and, therefore, in no way limiting, with reference to the accompanying drawings briefly described in the subsequent paragraph.

### BRIEF DESCRIPTION OF THE FIGURES

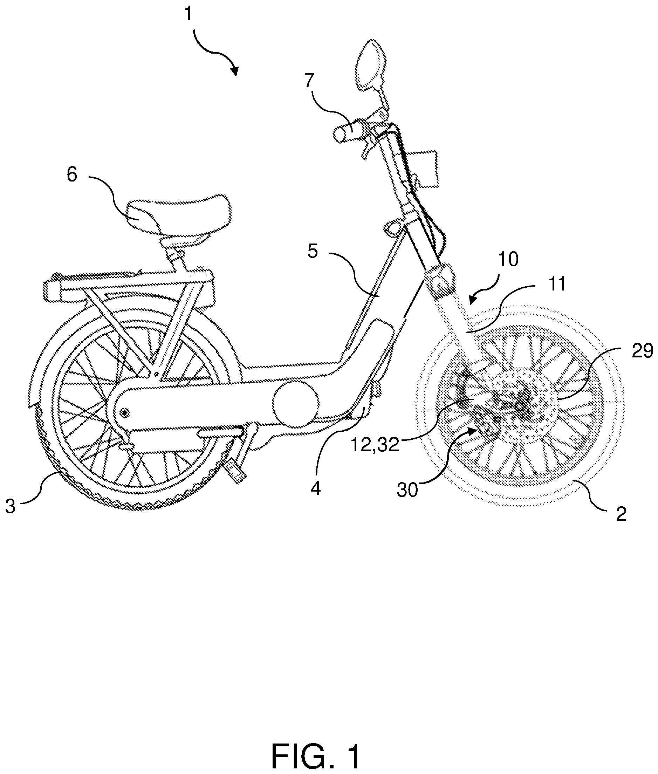

Figure 1 shows a side plan view of an exemplifying and non-limiting embodiment of a motorcycle comprising a front suspension.

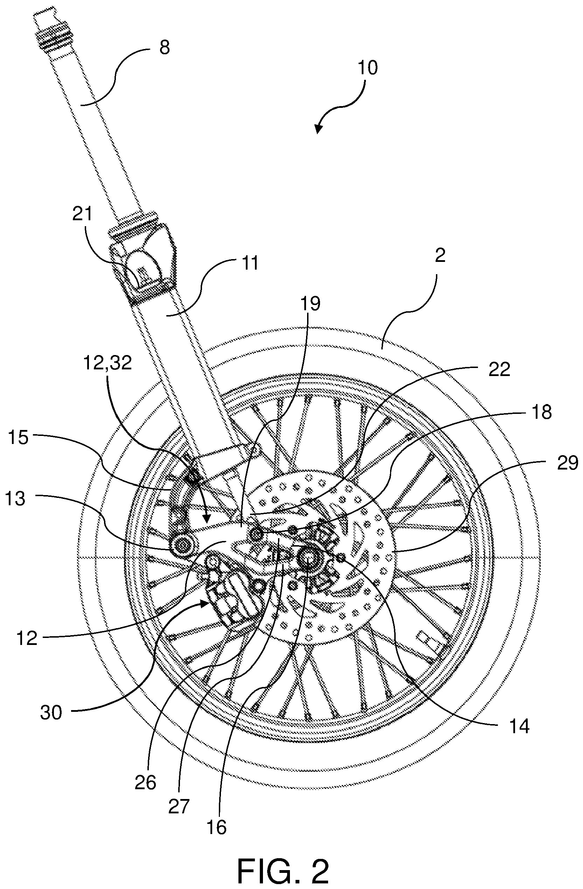

Figure 2 shows a side plan view of the front suspension of the motorcycle.

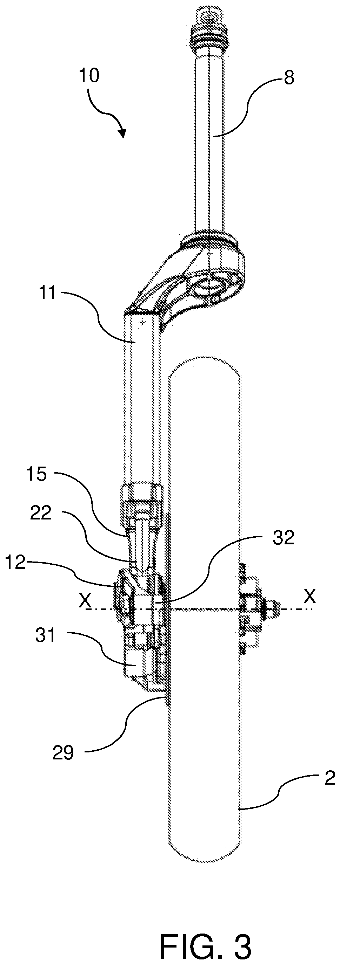

Figure 3 shows a front plan view of the front suspension of the motorcycle.

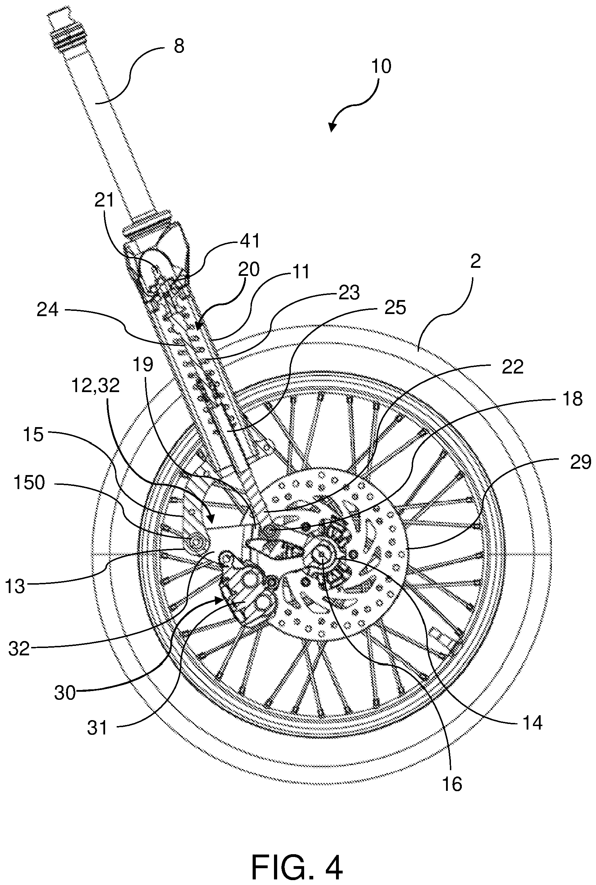

Figure 4 shows a side plan view of the front suspension of the motorcycle where some parts are shown in cross-section.

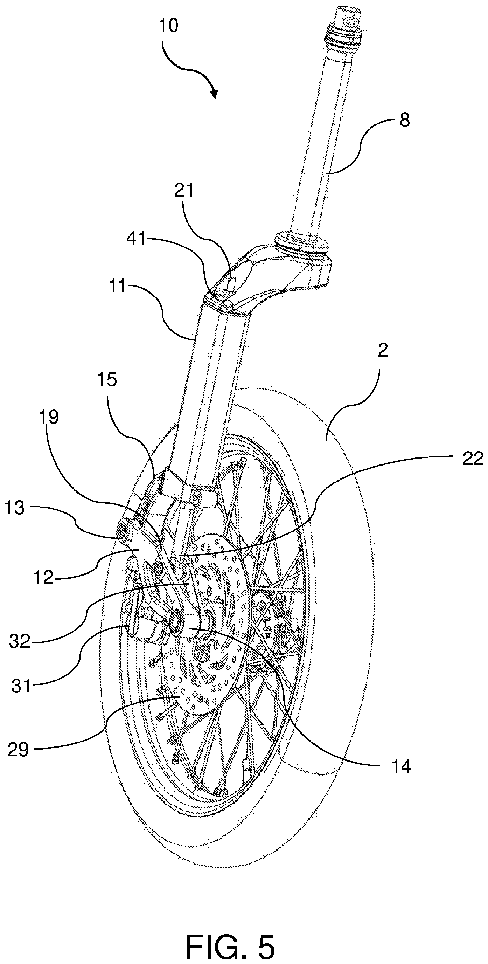

Figure 5 shows a perspective view of the front suspension of the motorcycle.

### DETAILED DESCRIPTION

In the accompanying figures, identical or similar elements have been indicated at the same numerical references.

The accompanying figures show an embodiment of a transport vehicle and, in particular, of a motorcycle 1. In the particular example represented in the figures, the motorcycle 1 is conceived, without thereby introducing any limitation, as a moped, comprising a front wheel 2 and a rear wheel 3, a drive motor 4, a support frame 5, a saddle 6, a steering handlebar 7 rotatably fixed to the support frame 5 so as to be able to rotate about a steering axis.

For the purposes of the present description, the term 'motorcycle' is to be considered in the broad sense, comprising any motorcycle having at least two wheels, i.e., a front wheel 2 and a rear wheel 3. Such definition includes, therefore, also motorcycles having three wheels, including for example two paired steering wheels on the front axle and one drive wheel on the rear axle, but also motorcycles comprising a single steering wheel on the front axle and two drive wheels on the rear axle. Finally, also included in the definition of a motorcycle are so-called quadricycles, which have two wheels on the front axle and two wheels on the rear axle.

As is well known, the motorcycle 1 further comprises a steering tube 8 fixed to the steering handlebars 7 so as to rotate integrally with the latter about a steering axis.

The motorcycle 1 further comprises a motorcycle front suspension 10 adapted and configured to secure the front wheel 2 to the steering tube 8, so that this front suspension 10 is operatively interposed between the steering tube 8 and the front wheel 2.

The drive motor 4 is directly or indirectly operatively connected to a drive wheel of the motorcycle 1, in the example, to the rear wheel 3. According to a possible embodiment, the drive motor 4 is an internal combustion engine. According to an alternative embodiment, the drive motor 4 is an electric or hybrid motor.

Although in the particular example represented and described the motorcycle front suspension 10 is a single-arm front suspension, cantilevered on one side of the front wheel 2, it should be noted that the teachings of the present patent application are also applicable to double-arm suspensions, i.e. fork suspensions.

The motorcycle front suspension 10 comprises a steering arm 11, mechanically connected or suitable to be mechanically connected to the steering handlebar 7 of the motorcycle 1. In the particular non-limiting example shown in the figures, the steering arm 11 has a portion of its upper end connected to the steering tube 8, so that it may rotate integrally with the latter about the steering axis. Note that the steering arm 11 and the steering tube 8 may be two separate, mechanically coupled pieces but may also form between them a single piece.

The motorcycle front suspension 10 further comprises a swing arm 12,32 having a first connection portion 13 which rotatably connects the swing arm 12,32 to the steering arm 11 and a second connection portion 14 adapted and configured to connect the swing arm 12,32 to the associable front wheel 2. Moreover, the motorcycle front suspension 10 comprises a shock absorber group 20 extending from an attachment head 21, mechanically connected to the steering arm 11, to an attachment foot 22, rotatably joined to the swing arm 12,32. Furthermore, the motorcycle front suspension 10 comprises a disc brake caliper 30 fixed to the swing arm 12, 32 between the first connection portion 13 and the second connection portion 14. For example, the disc brake caliper 30 is part of a braking device 29,30 of the motorcycle 1 comprising, in addition to the caliper 30, a disc 29 for a disc brake fixed to the front wheel 2 so that it may rotate together with the latter. The attachment of the caliper 30 to the swing arm 12,32 advantageously makes it possible to reduce the sinking of the motorcycle front suspension 10 during braking and to make the suspension 10 particularly tidy and compact in the vicinity of the hub of the front wheel 2.

In accordance with one embodiment, the first connection portion 13 is a first end of the swing arm 12,32 and the second connection portion 14 is a second end of the swing arm 12,32 opposite to said first end. The first connection portion 13 is rotatably joined to the steering arm 11, for example rotatably hinged to the steering arm 11, and the second connection portion 14 carries a rotation pin 16 of the associable front wheel 2. This rotation pin 16 defines an axis of rotation X-X for the front wheel 2. Preferably, the rotation pin 16 of the front wheel 2 has a forcedly engaged and interference-locked end portion in a locking seat defined within the second end portion of the swing arm 12,32. More preferably, the rotation pin 16 is tightened within the aforesaid locking seat so as to prevent a relative rotation between the rotation pin 16 and the swing arm 12,32.

In accordance with a particularly advantageous embodiment, the disc brake caliper 30 is a floating brake caliper and comprises a caliper body 31 and a support bracket 32 to which the caliper body 31 is slidably constrained and the swing arm 12,32 is, or comprises, the support bracket 32. This expedient further increases the compactness of the proposed solution. The general structure of a floating brake caliper is generally known to a person skilled in the art, and for this reason it will not be further detailed in the present description. For example, it is known to a person skilled in the art that the floating brake calipers comprise a structural element, called the support bracket 12, which slidably supports the caliper body 31 so that the caliper body 31 may slide in a direction perpendicular or substantially perpendicular to the support bracket 12 when the braking device 15 is activated and deactivated.

In accordance with a possible embodiment, the swing arm 12,32 comprises a first half-arm 12 and a second half-arm 32 arranged side by side, wherein one of said half-arms 12,32 is the support bracket 32 of the floating brake caliper 30. For the purposes of the present description, 'side by side' means that the two half-arms 12,32 are arranged so as to be side by side, without necessarily implying that the two half-arms are necessarily in contact with each other, since the two half-arms may also be spaced or even simultaneously partly in contact with each other and partly spaced. The particular aforementioned solution allows the mechanical coupling to the swing arm 12,32 of the steering arm 11 of the shock absorber group 20 to be simplified considerably. For example, according to a particular and non-limiting embodiment, the half-arms 12,32 are configured and arranged in such a way that the attachment foot 22 of the shock absorber group 20 is arranged between them. For example, the two half-arms 12,32 are arranged and shaped so as to be relatively closer together, e.g. adjacent, at the rotation pin 16 of the front wheel 2 and relatively further apart at the attachment foot 22 of the shock absorber group 20. For example, the two half-arms 12,32, starting from the rotation pin 16 of the front wheel 2 towards the attachment foot 22 of the shock absorber group 20, diverge progressively so that, at the attachment foot 22, they are spaced apart in order to be able to interpose the attachment foot 22 between them. Preferably, therefore, the attachment foot 22 is interposed between the two half-arms 12,32 and is rotatably hinged thereto, for example, by means of a cylindrical hinge. In the example shown in the figures, without introducing any limitation, the aforesaid cylindrical hinge has a hinge axis defined by a pin 18 that penetrates and/or is engaged in three aligned openings defined respectively in the half-arm 12, in the attachment head 22 and the half-arm 32.

According to an embodiment, the steering arm 11 comprises a main body and a connection arm 15 projecting from the main body. The first connection portion 13 of the swing arm 12, 32 rotatably connects the swing arm 12,32 to the steering arm 11 in correspondence of the connection arm 15. For example the connection arm 15 has a free end portion, and the first connection portion 13 of the swing arm 12,32 is rotatably joined, for example rotatably hinged, to said free end portion of the connection arm 15. Preferably, the connection arm 15 projects from one end of the main body of the steering arm 11. According to a particularly preferred embodiment, the connection arm 15 is a curved arm. The main body of the steering arm is preferably a tubular body, for example with a circular or more preferably quadrangular cross-section and even more preferably rectangular.

In the case wherein, as already explained previously, the swing arm 12,32 comprises two half-arms 12,32, it is advantageous to provide for the aforesaid half-arms 12,32 to be configured and arranged in such a way that the free end portion of the connection arm 15 is placed between them. For example, it is possible to provide for the free end portion of the connection arm 15 to be interposed and rotatably hinged between the two half-arms 12,32 by means of, for example, a hinge pin 150 that penetrates it and that for example penetrates both and/or is engaged in both half-arms 12,32.

According to a particularly advantageous embodiment, the swing arm 12,32 is a curved or non-rectilinear arm. This makes it easier to connect the attachment foot 22 to the swing arm 12,32, as it is possible, for example, to reduce the length of the attachment foot 22. In addition, it is possible to provide for the swing arm 12,32 to comprise a main arm 26 and a reinforcement arm 27 rigidly joined together, e.g. as a single piece. In this case, preferably, between the main arm 26 and the reinforcement arm 27 there is defined a through opening that allows the mass of the swing arm 12,32 to be reduced. The above applies preferably to each of the two half-arms 12,32 of the swing arm.

In accordance with an advantageous embodiment, the swing arm 12,32 comprises a third connection portion 19 which, in a resting condition of the shock absorber group 20, is arranged at a level higher than the first connection portion 13 and the second connection portion 14 of the swing arm 12,32. The attachment foot 22 of the shock absorber group 20 is joined to the third connection portion 19 of the swing arm 12,32. Also this expedient makes it easier to connect the attachment foot 22 to the swing arm 12,32, as it is possible, for example, to reduce in this way the length of the attachment foot 22. It should be noted that the third connection portion 19 is radially interposed between the first connection portion 13 and the second connection portion 14. The term "radially" means along one or more directions perpendicular to the axis of rotation X-X of the front wheel 2.

In accordance with an advantageous embodiment, the steering arm 11 is internally hollow, e.g. tubular, and houses at least part of the shock absorber assembly 20 therein. This expedient has the advantage of reducing the exposure of the shock absorber group 20 to dirt and weather.

In accordance with an advantageous embodiment, the shock absorber group comprises a silent block 41 operatively interposed between the attachment head 21 and the steering arm 11. In this way, the shock absorber group 20 may rotate inside the shock absorber group 20 to allow and follow the rotation of the swing arm 12,32 with respect to the steering arm 11. For example, the silent block is engaged in a through opening defined in the steering arm 11 and penetrated by the attachment head 21.

According to a preferred embodiment, in the motorcycle front suspension 10, the shock absorber group 20 comprises a spring 23 and a damper 24,25, and the spring 23 is entirely housed in the steering arm 11. The spring 23 is, for example, a helical spring interposed between the attachment head 21 and the attachment foot 22 of the shock absorber group 20 in order to exert an elastic thrust force that tends to move the attachment head 21 and the attachment foot 22 apart. The spring 23 preferably surrounds the damper 24.

Preferably the damper comprises a stem 24 and a sheath 25, wherein the stem 24 is adapted and configured to slide inside the sheath 25 and is housed in the steering arm 11. Also, this expedient has the advantage of reducing the exposure of the shock absorber group 20, and in particular the stem 24, to dirt and weather.

On the basis of what has been explained above, it is thus possible to understand how a motorcycle front suspension of the type described above may achieve the objects mentioned above with reference to the prior art. In effect, as explained above, this suspension is able to counteract excessive sinking during braking, is particularly compact, is characterized by a low aesthetic impact, leaves a significant portion of the disc of the disc brake exposed and ensures greater cleanliness and protection of the shock absorber group.

Without altering the principle of the invention, the embodiments and the details of implementation may vary widely with respect to those described and illustrated purely by way of non-limiting example, without thereby departing from the scope of the invention as defined in the accompanying claims.

## Claims

1. A motorcycle front suspension (10) comprising:
- a steering arm (11) mechanically connected, or adapted to be mechanically connected, to a steering handlebar (7) of a motorcycle (1), wherein the steering arm (11) comprises a main body and a connection arm (15) which projects from the main body;
- a swing arm (12,32) having a first connection portion (13) which rotatably connects the swing arm (12,32) to the steering arm (11) in correspondence of said connection arm (15) and a second connection portion (14) adapted and configured to connect the swing arm (12,32) with an associable front wheel (2);
- a shock absorber group (20) extending from an attachment head (21), mechanically connected to the steering arm (11), to an attachment foot (22), rotatably joined to the swing arm (12,32);
**characterised in that**
the motorcycle front suspension (10) comprises a disc brake caliper (30) fixed to the swing arm (12,32) between the first connection portion (13) and the second connection portion (14).

2. A motorcycle front suspension (10) according to claim 1, wherein the first connection portion (13) is a first end of the swing arm (12,32) and wherein the second connection portion (14) is a second end of the swing arm opposite to said first end, wherein the first connection portion (13) is rotatably joined to the steering arm (11) and the second connection portion (14) carries a rotation pin (16) of said associable front wheel (2).

3. A motorcycle front suspension (10) according to claims 1 or 2, wherein:
- the disc brake caliper (30) is a floating brake caliper and comprises a caliper body (31) and a support bracket (32) to which the caliper body (31) is slidably constrained;
- the swing arm (12,32) is, or comprises, the support bracket (32);
- the swing arm (12,32) preferably comprises a first half-arm (12) and a second half-arm (32) arranged side by side and wherein one of said half-arms is said support bracket (32).

4. A motorcycle front suspension (10) according to claim 3, wherein the half-arms (12,32) are arranged and configured in such a manner that the attachment foot (22) of the shock absorber group (20) is arranged between them.

5. A motorcycle front suspension (10) according to any one of the preceding claims, wherein the connection arm (15) has a free end portion and wherein the first connection portion (13) of the swing arm (12,32) is rotatably joined to the free end portion of the connection arm (15).

6. A motorcycle front suspension (10) according to one of the claims 3 or 4 and according to claim 5, wherein said half-arms (12,32) are arranged configured so that said free end portion of the connection arm (15) is interposed between them.

7. A motorcycle front suspension (10) according to claims 5 or 6, wherein the connection arm (15) projects from an end portion of the main body of the steering arm (11).

8. A motorcycle front suspension (10) according to any one of claims from 5 to 7, wherein the connection arm (15) is a curved arm.

9. A motorcycle front suspension (10) according to any one of the preceding claims, wherein the swing arm (12, 32) is a curved or non-rectilinear arm and wherein the swing arm (12,32) preferably comprises a main arm (26) and a reinforcing arm (27) rigidly connected to each other.

10. A motorcycle front suspension (10) according to claim 9, wherein a through opening is defined between the main arm (26) and the reinforcing arm (27).

11. A motorcycle front suspension (10) according to any one of the preceding claims, wherein the swing arm (12,32) comprises a third connection portion (19) which, in a rest condition of the shock absorber group (20), is arranged at a level higher than the first connection portion (13) and the second connection portion (14) of the swing arm (12,32) and wherein the attachment foot (22) is connected to the third connection portion (19) of the swing arm (12,32).

12. A motorcycle front suspension (10) according to any one of the preceding claims, wherein the steering arm (11) is internally hollow and houses at least part of the shock absorber group (20).

13. A motorcycle front suspension (10) according to any one of the preceding claims, wherein the shock absorber group (20) comprises a silent block (41) operatively interposed between the attachment head (21) and the steering arm (11).

14. A motorcycle front suspension (10) according to claim 13, wherein the shock absorber group (20) comprises a spring (23) and a damper (24, 25) wherein the spring (23) is entirely housed in the steering arm (11) and wherein the damper preferably comprises a stem (24) and a sheath (25), wherein the stem is adapted and configured to slide inside the sheath (25) and is housed in the steering arm (11).

15. A motorcycle (1) comprising at least a motorcycle front suspension (10) according to any one of the preceding claims, wherein the motorcycle (1) is preferably a moped.

## Patentansprüche

1. Motorradvorderradaufhängung (10), umfassend:
- einen Lenkarm (11), der mechanisch mit einem Lenker (7) eines Motorrads (1) verbunden ist oder zur mechanischen Verbindung mit diesem ausgelegt ist, wobei der Lenkarm (11) einen Hauptkörper und einen Verbindungsarm (15) umfasst, der vom Hauptkörper hervorsteht;
- einen Schwingarm (12, 32), der einen ersten Verbindungsabschnitt (13), der den Schwingarm (12, 32) entsprechend dem Verbindungsarm (15) drehbar mit dem Lenkarm (11) verbindet, und einen zweiten Verbindungsabschnitt (14) aufweist, der so ausgelegt und konfiguriert ist, dass er den Schwingarm (12, 32) mit einem zugehörigen Vorderrad (2) verbindet;
- eine Stoßdämpfergruppe (20), die sich von einem Befestigungskopf (21), der mechanisch mit dem Lenkarm (11) verbunden ist, zu einem Befestigungsfuß (22) erstreckt, der drehbar mit dem Schwingarm (12, 32) verbunden ist;
**dadurch gekennzeichnet, dass**
die Motorradvorderradaufhängung (10) einen Scheibenbremssattel (30) umfasst, der zwischen dem ersten Verbindungsabschnitt (13) und dem zweiten Verbindungsabschnitt (14) an dem Schwingarm (12, 32) fixiert ist.

2. Motorradvorderradaufhängung (10) nach Anspruch 1, wobei der erste Verbindungsabschnitt (13) ein erstes Ende des Schwingarms (12, 32) ist und wobei der zweite Verbindungsabschnitt (14) ein zweites Ende des Schwingarms gegenüber dem ersten Ende ist, wobei der erste Verbindungsabschnitt (13) drehbar mit dem Lenkarm (11) verbunden ist und der zweite Verbindungsabschnitt (14) einen Drehstift (16) des zugehörigen Vorderrads (2) trägt.

3. Motorradvorderradaufhängung (10) nach Anspruch 1 oder 2, wobei:
- der Scheibenbremssattel (30) ein schwimmender Bremssattel und ist und einen Bremssattelkörper (31) und eine Stützhalterung (32) umfasst, an der der Bremssattelkörper (31) verschiebbar angebracht ist;
- der Schwingarm (12, 32) die Stützhalterung (32) ist oder diese umfasst,
- der Schwingarm (12, 32) vorzugsweise einen ersten Halbarm (12) und einen zweiten Halbarm (32) umfasst, die nebeneinander angeordnet sind, und wobei einer der Halbarme die Stützhalterung (32) ist.

4. Motorradvorderradaufhängung (10) nach Anspruch 3, wobei die Halbarme (12, 32) so angeordnet und konfiguriert sind, dass der Befestigungsfuß (22) der Stoßdämpfergruppe (20) zwischen ihnen angeordnet ist.

5. Motorradvorderradaufhängung (10) nach einem der vorhergehenden Ansprüche, wobei der Verbindungsarm (15) einen freien Endabschnitt aufweist und wobei der erste Verbindungsabschnitt (13) des Schwingarms (12, 32) drehbar mit dem freien Endabschnitt des Verbindungsarms (15) verbunden ist.

6. Motorradvorderradaufhängung (10) nach einem der Ansprüche 3 oder 4 und nach Anspruch 5, wobei die Halbarme (12, 32) so angeordnet und konfiguriert sind, dass der freie Endabschnitt des Verbindungsarms (15) zwischen ihnen eingefügt ist.

7. Motorradvorderradaufhängung (10) nach Anspruch 5 oder 6, wobei der Verbindungsarm (15) von einem Endabschnitt des Hauptkörpers des Lenkarms (11) hervorsteht.

8. Motorradvorderradaufhängung (10) nach einem der Ansprüche 5 bis 7, wobei der Verbindungsarm (15) ein gekrümmter Arm ist.

9. Motorradvorderradaufhängung (10) nach einem der vorhergehenden Ansprüche, wobei der Schwingarm (12, 32) ein gekrümmter oder nicht geradliniger Arm ist und wobei der Schwingarm (12, 32) vorzugsweise einen Hauptarm (26) und einen Verstärkungsarm (27) umfasst, die starr miteinander verbunden sind.

10. Motorradvorderradaufhängung (10) nach Anspruch 9, wobei zwischen dem Hauptarm (26) und dem Verstärkungsarm (27) eine Durchgangsöffnung definiert ist.

11. Motorradvorderradaufhängung (10) nach einem der vorhergehenden Ansprüche, wobei der Schwingarm (12, 32) einen dritten Verbindungsabschnitt (19) umfasst, der in einem Ruhezustand der Stoßdämpfergruppe (20) auf einer höheren Ebene angeordnet ist als der erste Verbindungsabschnitt (13) und der zweite Verbindungsabschnitt (14) des Schwingarms (12, 32), und wobei der Befestigungsfuß (22) mit dem dritten Verbindungsabschnitt (19) des Schwingarms (12, 32) verbunden ist.

12. Motorradvorderradaufhängung (10) nach einem der vorhergehenden Ansprüche, wobei der Lenkarm (11) innen hohl ist und mindestens einen Teil der Stoßdämpfergruppe (20) aufnimmt.

13. Motorradvorderradaufhängung (10) nach einem der vorhergehenden Ansprüche, wobei die Stoßdämpfergruppe (20) einen Silentblock (41) umfasst, der funktionsmäßig zwischen dem Befestigungskopf (21) und dem Lenkarm (11) eingefügt ist.

14. Motorradvorderradaufhängung (10) nach Anspruch 13, wobei die Stoßdämpfergruppe (20) eine Feder (23) und einen Dämpfer (24, 25) umfasst, wobei die Feder (23) vollständig im Lenkarm (11) aufgenommen ist und wobei der Dämpfer vorzugsweise einen Schaft (24) und eine Hülle (25) umfasst, wobei der Schaft so ausgelegt und konfiguriert ist, dass er innerhalb der Hülle (25) gleitet und im Lenkarm (11) aufgenommen ist.

15. Motorrad (1), das mindestens eine Motorradvorderradaufhängung (10) nach einem der vorhergehenden Ansprüche umfasst, wobei das Motorrad (1) vorzugsweise ein Moped ist.

## Revendications

1. Suspension avant (10) de motocyclette comprenant :
- un bras de direction (11) relié de manière mécanique, ou conçu pour être relié de manière mécanique, à un guidon de direction (7) d'une motocyclette (1), dans laquelle le bras de direction (11) comprend un corps principal et un bras de liaison (15), lequel fait saillie du corps principal ;
- un bras oscillant (12, 32) comportant une première partie de liaison (13) qui relie de manière rotative le bras oscillant (12, 32) au bras de direction (11) en correspondance dudit bras de liaison (15) et une deuxième partie de liaison (14) adaptée et conçue pour relier le bras oscillant (12, 32) à une roue avant (2) pouvant être associée ;
- un groupe d'absorbeurs de chocs (20) s'étendant depuis une tête de fixation (21), reliée de manière mécanique au bras de direction (11), jusqu'à un pied de fixation (22), relié de manière rotative au bras oscillant (12, 32) ;
**caractérisée en ce que**
la suspension avant (10) de motocyclette comprend un étrier de frein à disque (30) fixé au bras oscillant (12, 32) entre la première partie de liaison (13) et la deuxième partie de liaison (14).

2. Suspension avant (10) de motocyclette selon la revendication 1, dans laquelle la première partie de liaison (13) est une première extrémité du bras oscillant (12, 32) et dans laquelle la deuxième partie de liaison (14) est une seconde extrémité du bras oscillant, opposée à ladite première extrémité, dans laquelle la première partie de liaison (13) est reliée de manière rotative au bras de direction (11) et la deuxième partie de liaison (14) porte une broche de rotation (16) de ladite roue avant (2) pouvant être associée.

3. Suspension avant (10) de motocyclette selon les revendications 1 ou 2, dans laquelle :
- l'étrier de frein à disque (30) est un étrier de frein flottant et comprend un corps d'étrier (31) et une patte de support (32) par rapport à laquelle le corps d'étrier (31) est contraint de manière coulissante ;
- le bras oscillant (12, 32) est, ou comprend, la patte de support (32) ;
- le bras oscillant (12, 32) comprend, de préférence, un premier demi-bras (12) et un second demi-bras (32) disposés côte à côte et dans laquelle l'un desdits demi-bras est ladite patte de support (32).

4. Suspension avant (10) de motocyclette selon la revendication 3, dans laquelle les demi-bras (12, 32) sont disposés et conçus de telle sorte que le pied de fixation (22) du groupe d'absorbeurs de chocs (20) est disposé entre eux.

5. Suspension avant (10) de motocyclette selon l'une quelconque des revendications précédentes, dans laquelle le bras de liaison (15) comporte une partie d'extrémité libre et dans laquelle la première partie de liaison (13) du bras oscillant (12, 32) est reliée de manière rotative à la partie d'extrémité libre du bras de liaison (15).

6. Suspension avant (10) de motocyclette selon l'une des revendications 3 ou 4 et selon la revendication 5, dans laquelle lesdits demi-bras (12, 32) sont disposés et conçus de telle sorte que ladite partie d'extrémité libre du bras de liaison (15) est interposée entre eux.

7. Suspension avant (10) de motocyclette selon les revendications 5 ou 6, dans laquelle le bras de liaison (15) fait saillie d'une partie d'extrémité du corps principal du bras de direction (11).

8. Suspension avant (10) de motocyclette selon l'une quelconque des revendications 5 à 7, dans laquelle le bras de liaison (15) est un bras courbé.

9. Suspension avant (10) de motocyclette selon l'une quelconque des revendications précédentes, dans laquelle le bras oscillant (12, 32) est un bras courbé ou non rectiligne et dans laquelle le bras oscillant (12, 32) comprend, de préférence, un bras principal (26) et un bras de renfort (27) reliés l'un à l'autre de manière rigide.

10. Suspension avant (10) de motocyclette selon la revendication 9, dans laquelle une ouverture traversante est définie entre le bras principal (26) et le bras de renfort (27).

11. Suspension avant (10) de motocyclette selon l'une quelconque des revendications précédentes, dans laquelle le bras oscillant (12, 32) comprend une troisième partie de liaison (19) qui, dans un état de repos du groupe d'absorbeurs de chocs (20), est disposée à un niveau supérieur au niveau de la première partie de liaison (13) et au niveau de la deuxième partie de liaison (14) du bras oscillant (12, 32) et dans laquelle le pied de fixation (22) est relié à la troisième partie de liaison (19) du bras oscillant (12, 32).

12. Suspension avant (10) de motocyclette selon l'une quelconque des revendications précédentes, dans laquelle le bras de direction (11) est creux intérieurement et loge au moins une partie du groupe d'absorbeurs de chocs (20).

13. Suspension avant (10) de motocyclette selon l'une quelconque des revendications précédentes, dans laquelle le groupe d'absorbeurs de chocs (20) comprend un support anti-vibratoire (41) interposé de manière fonctionnelle entre la tête de fixation (21) et le bras de direction (11).

14. Suspension avant (10) de motocyclette selon la revendication 13, dans laquelle le groupe d'absorbeurs de chocs (20) comprend un ressort (23) et un amortisseur (24, 25), dans laquelle le ressort (23) est entièrement logé dans le bras de direction (11) et dans laquelle l'amortisseur, de préférence, comprend une tige (24) et une gaine (25), dans laquelle la tige est adaptée et conçue pour coulisser à l'intérieur de la gaine (25) et est logée dans le bras de direction (11).

15. Motocyclette (1) comprenant au moins une suspension avant (10) de motocyclette selon l'une quelconque des revendications précédentes, dans laquelle la motocyclette (1) est, de préférence, un vélomoteur.
